(19) Europäisches Patentamt
European Patent Office
Office européen des brevets

(11) EP 3 525 338 A1

(12) EUROPEAN PATENT APPLICATION

(43) Date of publication:
**14.08.2019 Bulletin 2019/33**

(51) Int Cl.:
***H02P 6/10*** *(2006.01)* ***H02P 6/185*** *(2016.01)*

(21) Application number: **19155175.3**

(22) Date of filing: **01.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.02.2018 JP 2018022543**

(71) Applicant: **MITSUBISHI HEAVY INDUSTRIES THERMAL SYSTEMS, LTD.**
**Tokyo 108-8215 (JP)**

(72) Inventors:
- **Aiba, Kenichi**
  **Tokyo, 100-8332 (JP)**
- **Satou, Takeshi**
  **Tokyo, 108-8215 (JP)**
- **Sumito, Kiyotaka**
  **Tokyo, 100-8332 (JP)**
- **Shimizu, Kenji**
  **Tokyo, 100-8332 (JP)**
- **Watanabe, Takamasa**
  **Tokyo, 100-8332 (JP)**
- **Sunohara, Tetsu**
  **Tokyo, 100-8332 (JP)**

(74) Representative: **Henkel, Breuer & Partner**
**Patentanwälte**
**Maximiliansplatz 21**
**80333 München (DE)**

# (54) MOTOR CONTROLLER AND MOTOR CONTROL METHOD

(57) A motor controller includes a speed control unit that commands values for currents supplied to a motor in order to rotate the motor at a target speed, an inductance change unit that changes an inductance of the motor on the basis of information on a torque axis current among the values of the currents supplied to the motor, a position estimation unit that estimates a rotation position of the motor from the values of the currents by using the inductance, an average torque calculation section that calculates an average load torque of the motor, a torque pattern storage section that stores a normalized torque pattern serving as a reference for changing an output torque of the motor in accordance with the rotation position of the motor, and a torque control unit that generates a compensation torque pattern for changing the output torque of the motor in accordance with the rotation position of the motor by a product of the average load torque and the normalized torque pattern, and corrects the values of the currents supplied to the motor.

FIG. 1

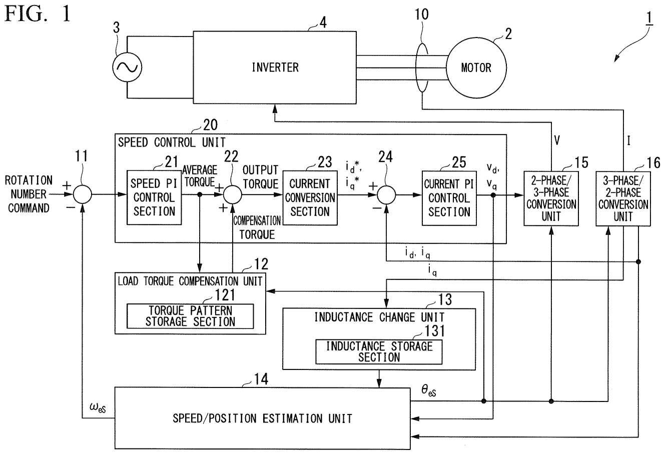




EP 3 525 338 A1

## Description

[Technical Field]

The present invention relates to a motor controller and a motor control method.

[Background Art]

In a compressor used in an air conditioner and the like, since refrigerant gas pressure changes in each process of suction, compression, and discharge during one revolution, fluctuations in a load torque regularly occur. On the other hand, since a driving motor connected to the compressor is operated to generate a constant driving torque during one revolution, a rotation number variation occurs due to unbalance between the driving torque and the load torque, resulting in the occurrence of a vibration.

For example, in a technology disclosed in Patent Literature 1, on the basis of current detection values $I_{dc}$ and $Iq_c$ on a control axis, d-axis and q-axis voltage command values Vd* and Vq* and the like, an axial error (an estimated value) $\Delta\theta_c$ between the rear axis and the control axis is calculated by a predetermined formula. Furthermore, in the technology disclosed in Patent Literature 1, a torque difference estimation value $\Delta\tau_m$, which is a value corresponding to a difference between a motor torque $\tau_m$ and a load torque $\tau_L$, is estimated using the axial error $\Delta\theta_c$. Furthermore, in the technology disclosed in Patent Literature 1, a pulsating torque current command value $I_{qsin}$*, which causes the torque difference estimation value $\Delta\tau_m$^ to be closer to zero, is generated, and the generated pulsating torque current command value $I_{qsin}$* is added to a torque current command value $I_{tq}$*, thereby generating a current command value $I_q$*.

However, in the technology disclosed in Patent Literature 1, since an error occurs in speed position estimation when there is a change in a current, there is a problem that positional shift occurs and an error occurs in a speed fluctuation estimation value.

[Citation List]

[Patent Literature]

[Patent Literature 1]
Japanese Unexamined Patent Application, First Publication No. 2016-82636

[Summary of Invention]

[Technical Problem]

The present invention has been made to solve the aforementioned problems, and an object of the present invention is to provide a motor controller and a motor control method, by which it is possible to reduce an error of a speed estimation value and to perform vibration suppression.

[Solution to Problem]

According to a first aspect of the present of the present invention, a motor controller is a controller of a motor connected to a compressor and includes a speed control unit that is configured to command values for currents supplied to a motor in order to rotate the motor at a target speed; an inductance change unit that is configured to change an inductance of the motor on the basis of information on a torque axis current among the values of the currents supplied to the motor; a position estimation unit that is configured to estimate a rotation position of the motor from the values of the currents by using the inductance changed by the inductance change unit; an average torque calculation section that is configured to calculate an average load torque of the motor; a torque pattern storage section that is configured to store a normalized torque pattern serving as a reference for changing an output torque of the motor in accordance with the rotation position of the motor; and a torque control unit that is configured to generate a compensation torque pattern for changing the output torque of the motor in accordance with the rotation position of the motor by a product of the average load torque and the normalized torque pattern, and correct the values of the currents supplied to the motor.

Furthermore, according to a second aspect of the present invention, in the motor controller, the information on the torque axis current among the values of the currents may be a torque axis current value, and the motor controller may include an inductance storage section that is configured to store a correspondence relation between the torque axis current value and the inductance, wherein the inductance change unit may be configured to change the inductance of the motor to an inductance corresponding to the torque axis current value and stored in the inductance storage section.

Furthermore, according to a third aspect of the present invention, in the motor controller, the information on the torque axis current among the values of the currents may be a torque axis current indication, and the motor controller may include an inductance storage section that is configured to store a correspondence relation between the torque axis current indication and the inductance, wherein the inductance change unit may be configured to change the inductance of the motor to an inductance corresponding to the torque axis current indication and stored in the inductance storage section.

Furthermore, according to a fourth aspect of the present invention, in the motor controller, the information on the torque axis current among the values of the currents may be a torque axis current indication, and the motor controller may include an inductance storage section that stores a correspondence relation between the torque axis current indication and the inductance, wherein the inductance change unit may be configured to calculate an average value of the torque axis current indication in a predetermined period, and change the inductance of the motor to an inductance corresponding to the average value of the torque axis current indication in the predetermined period and stored in the inductance storage section.

Furthermore, according to an aspect of the present invention, a motor control method of a motor controller is a motor control method of a motor controller and includes a step in which a speed control unit commands values for currents supplied to a motor in order to rotate the motor at a target speed, a step in which an inductance change unit changes an inductance of the motor on the basis of information on a torque axis current among the values of the currents supplied to the motor, a step in which a position estimation unit estimates a rotation position of the motor from the values of the currents by using the inductance changed by the inductance change unit, a step in which an average torque calculation section calculates an average load torque of the motor, and a step in which a torque control unit generates a compensation torque pattern for changing an output torque of the motor in accordance with a rotation position of the motor by a product of a normalized torque pattern, which serves as a reference for changing the output torque of the motor in accordance with the rotation position of the motor, and the average load torque, and corrects the values of the currents supplied to the motor.

[Advantageous Effects of Invention]

According to the present invention, it is possible to reduce an error of a speed estimation value and to perform vibration suppression.

[Brief Description of Drawings]

FIG. 1 is a block diagram illustrating an example of a configuration of a motor controller in a first embodiment.

(A) of FIG. 2 is a diagram illustrating an operating range 40 of a compressor that performs each process of suction, compression, and discharge during one revolution, (B) of FIG. 2 is a diagram illustrating a load torque around (1) with a reference numeral 41 in (A) of FIG. 2 and an example of a normalized torque pattern used in the present embodiment, and (C) of FIG. 2 is a diagram illustrating a load torque around (2) with a reference numeral 42 in (A) of FIG. 2 and an example of a normalized torque pattern used in the present embodiment.

FIG. 3 is a diagram illustrating an example of torque axis current with respect to torque axis magnetic flux characteristics.

FIG. 4 is a diagram illustrating an example of current with respect to inductance characteristics stored in an inductance change unit according to the first embodiment.

FIG. 5 is a flowchart illustrating an example of a procedure performed by a motor controller according to the first embodiment.

FIG. 6 is a block diagram illustrating an example of a configuration of a motor controller in a second embodiment.

[Description of Embodiments]

Hereinafter, embodiments of the present invention will be described with reference to the drawings. In the drawings used in the following description, in order to make respective members have a recognizable size, the scales of respective members may be appropriately changed.

<First embodiment >

In the embodiment, although an example of a motor controller, which is used in an air conditioner in which a motor is connected to a compressor, will be described, the motor controller may be used in a vehicle.

<Example of configuration of motor controller>

FIG. 1 is a block diagram illustrating an example of a configuration of a motor controller in the present embodiment.

As illustrated in FIG. 1, a motor controller 1 includes a motor 2, an AC power source 3, an inverter 4, a current sensor 10, a subtraction unit 11, a load torque compensation unit 12 (a torque control unit), an inductance change unit 13, a speed/position estimation unit 14 (a position estimation unit), a 2-phase/3-phase conversion unit 15, a 3-phase/2-phase conversion unit 16, and a speed control unit 20.

The speed control unit 20 includes a speed PI control section 21 (an average torque calculation section), an addition section 22, a current conversion section 23, a subtraction section 24, and a current PI control section 25.

The motor controller 1 controls the rotation of the motor 2 by active torque control. In such a case, when the motor 2 rotates, a load is different at respective positions during one rotation. In active torque control, for example, a current value changes for every several tens of msec. The active torque control, for example, increases a current value at a position having a large load and decreases a current value at a position having a small load. In this way, in the active torque control, speed fluctuations are reduced, so that the vibration of the motor 2 is reduced. However, in the conventional active torque control, since a torque axis (q axis) inductance $L_q$ used when estimating a position and a speed is a fixed value, an error occurs in the estimated position and speed. In the present embodiment, the q axis inductance $L_q$ is changed according to a q axis current, so that speed fluctuations are significantly reduced.

The motor 2 is a 3-phase motor.

The AC power source 3 supplies AC power to the inverter 4.

The inverter 4 is connected to the motor 2. The inverter 4 controls the rotation of the motor 2 by supplying a current to the motor 2.

The current sensor 10 detects a value of the current supplied to the motor 2 and outputs the detected current value to the 3-phase/2-phase conversion unit 16.

The subtraction unit 11 subtracts a rotational speed (the number of rotations) $\omega_{eS}$ estimated by the speed/position estimation unit 14 from a rotation number command for commanding the number of rotations of the motor 2, and outputs the subtraction result to the speed control unit 20.

The speed control unit 20 generates a d-axis current indication $i_d$* and a q-axis current indication $i_q$* for controlling the motor 2. The speed control unit 20 generates a d-axis voltage value $v_d$ and a q-axis voltage value $v_q$ for controlling the motor 2. The speed control unit 20 outputs the generated d-axis voltage value $v_d$ and q-axis voltage value $v_q$ to the speed/position estimation unit 14 and the 2-phase/3-phase conversion unit 15.

The speed PI control section 21 calculates an average load torque (hereinafter, also called an average torque) of the motor by proportional integral control on the basis of the rotation number command output from the subtraction unit 11. The speed PI control section 21 outputs the calculated average torque to the load torque compensation unit 12 and the addition section 22.

The addition section 22 adds a compensation torque output by the load torque compensation unit 12 to the average torque output by the speed PI control section 21, and outputs the sum value to the current conversion section 23 as an output torque. It should be noted that this motor output torque indicates a relation between a rotation angle of the motor 2 and a command value of the current supplied to the motor 2.

The current conversion section 23 converts the added torque output by the addition section 22 into a current, and outputs the converted current command values (a d-axis current command value $i_d$* and a q-axis current command value $i_q$*) to the subtraction section 24.

The subtraction section 24 subtracts a d-axis current $i_d$ (a deviation of the motor current) output by the 3-phase/2-phase conversion unit 16 from the d-axis current command value $i_d$* output by the current conversion section 23, and outputs the subtraction result to the current PI control section 25. The subtraction section 24 subtracts a q-axis current $i_q$ (a deviation of the motor current) output by the 3-phase/2-phase conversion unit 16 from the q-axis current command value $i_q$* output by the current conversion section 23, and outputs the subtraction result to the current PI control section 25.

The current PI control section 25 generates the d-axis voltage value $v_d$ and the q-axis voltage value $v_q$ by proportional integral control on the basis of the current command values output by the subtraction section 24. The speed control unit 20 outputs the generated d-axis voltage value $v_d$ and q-axis voltage value $v_q$ to the speed/position estimation unit 14 and the 2-phase/3-phase conversion unit 15.

The 2-phase/3-phase conversion unit 15 converts the d-axis voltage value $v_d$ and the q-axis voltage value $v_q$ output by the speed control unit 20 into a 3-phase voltage value in accordance with a rotation angle $\theta_{cS}$ of the motor 2 output by the speed/position estimation unit 14, and supplies the converted 3-phase voltage value to the inverter 4.

The 3-phase/2-phase conversion unit 16 converts the 3-phase current value detected by the current sensor 10 into a 2-phase d-axis current value $i_d$ and a q-axis current value $i_q$ in accordance with the rotation angle $\theta_{eS}$ of the motor 2 output by the speed/position estimation unit 14. The 3-phase/2-phase conversion unit 16 outputs the converted d-axis current value $i_d$ and q-axis current value $i_q$ to the speed/position estimation unit 14 and the subtraction section 24 of the speed control unit 20. Furthermore, the 3-phase/2-phase conversion unit 16 outputs the q-axis current value $i_q$ to the inductance change unit 13.

The load torque compensation unit 12 includes a torque pattern storage section 121.

The torque pattern storage section 121 stores a normalized torque pattern to be described later.

The load torque compensation unit 12 generates a compensation torque pattern by multiplying the average torque output by the speed PI control section 21 by the normalized torque pattern. That is, the load torque compensation unit 12 generates a compensation torque pattern by adjusting the normalized torque pattern to a large extent under a condition that the load of the compressor is large. Furthermore, the load torque compensation unit 12 generates a compensation torque pattern by adjusting the normalized torque pattern to a small extent under a condition that the load of the compressor is small. The load torque compensation unit 12 outputs the generated compensation torque patterns to the addition section 22.

The inductance change unit 13 includes an inductance storage section 131.

The inductance storage section 131 stores a relation between the q-axis current value $i_q$ and the inductance $L_q$ in the form of a table or a formula for example. Alternatively, the inductance storage section 131 stores a relation between the q-axis current value $i_q$ and an inductance $L_q$' in the form of a table or a formula for example. The inductance $L_q$' is a differential value $d\lambda_q/di_q$ of a q-axis (a torque axis) current $i_q$ with respect to a torque axis magnetic flux $\lambda_q$.

The inductance change unit 13 calculates at least one of the inductances $L_q$ and $L_q$' corresponding to the q-axis current value $i_q$ output by the 3-phase/2-phase conversion unit 16 on the basis of the relation stored in the inductance storage section 131. The inductance change unit 13 outputs at least one of the calculated inductances $L_q$ and $L_q$' to the speed/position estimation unit 14.

The speed/position estimation unit 14 receives the d-axis voltage value $v_d$ and the q-axis voltage value $v_q$ output by the current PI control section 25 and the d-axis current value $i_d$ and the q-axis current value $i_q$ output by the 3-phase/2-phase conversion unit 16. Moreover, the speed/position estimation unit 14 receives at least one of $L_q$ and $L_q$' output by the inductance change unit 13. The speed/position estimation unit 14 changes at least one of $L_q$ and $L_q$' output by the inductance change unit 13, estimates the rotational speed (the number of rotations of the motor) $\omega_{eS}$ of the motor 2 from the input values, and outputs the estimated rotational speed (the number of rotations) $\omega_{eS}$ to the subtraction unit 11. The speed/position estimation unit 14 estimates the rotation angle $\theta_{eS}$ (the rotation position of the motor) of a rotor of the motor 2 from the input values, and outputs the estimated rotation angle $\theta_{eS}$ to the load torque compensation unit 12, the 2-phase/3-phase conversion unit 15, and the 3-phase/2-phase conversion unit 16. It should be noted that estimation methods of the rotational speed (the number of rotations) $\omega_{eS}$ and the rotation angle $\theta_{eS}$ will be described later.

<Operating range of compressor and example of normalized torque pattern>

Next, the operating range of the compressor used in the air condition and the like and the normalized torque pattern will be described.

(A) of FIG. 2 is a diagram illustrating an operating range 40 of the compressor that performs each process of suction, compression, and discharge during one revolution. (B) of FIG. 2 is a diagram illustrating a load torque around (1) with a reference numeral 41 in (A) of FIG. 2 and an example of the normalized torque pattern used in the present embodiment. (C) of FIG. 2 is a diagram illustrating a load torque around (2) with a reference numeral 42 in (A) of FIG. 2 and an example of the normalized torque pattern used in the present embodiment.

In (A) of FIG. 2, a horizontal axis denotes a low pressure (Lp, unit: MPa) of the compressor and a vertical axis denotes a high pressure (Hp, unit: MPa) thereof. In (B) of FIG. 2 and (C) of FIG. 2, a horizontal axis denotes the rotation angle of the rotor of the motor and a vertical axis denotes a torque (unit: Nm).

The operating range with the reference numeral 40 in (A) of FIG. 2 is an example of a range on a design of high pressure during compression and low pressure during suction in the compressor that performs each process of suction, compression, and discharge during one revolution. Outside the operating range 40, in the case of high pressure, the compressor may be broken, and in the case of low pressure, a compression ratio is too high and too much stress may be applied to some parts.

Furthermore, in (A) of FIG. 2, around (1) with the reference numeral 41 and around (2)with the reference numeral 42, the magnitudes of load torques are different from each other in each process of the suction, the compression, and the discharge. For example, around (1) with the reference numeral 41, a difference between a suction side and a compression side is small as indicated by a curve with a reference numeral 43 in a graph of (B) of FIG. 2. Furthermore, around (2) with the reference numeral 42, the difference between the suction side and the compression side is large. This difference, for example, changes according to outdoor temperature conditions, difference between heating and cooling, the number of revolutions of the compressor, differences in an operating method, and the like.

In the compressor, the driving motor connected to the compressor is operated to have a constant rotation speed during one revolution. However, due to a change in refrigerant gas pressure in each process of suction, compression, and discharge during one revolution, a fluctuation in the number of rotations caused by unbalance between a driving torque and a load torque occurs, and thereby a vibration occurs. Therefore, in order to prevent such a vibration, when a difference between the magnitudes of load torques at the suction side and the compression side as illustrated in (B) of FIG. 2 and (C) of FIG. 2 is not taken into account, it is not possible to reliably prevent such a vibration. Therefore, in the present embodiment, normalized torque patterns with reference numerals 44 and 46 in (B) of FIG. 2 and (C) of FIG. 2 are selected according to the magnitudes of the load torque, and the driving torque of the motor is balanced with the load torque occurring by driving the compressor, so that such a vibration is prevented.

The normalized torque patterns 44 and 46, for example, are coefficients for changing the output torque of the motor so as to match with an estimated fluctuation torque of a load calculated in advance at every rotation angle 30° of the rotor of the motor. Furthermore, when the rotation angle of the motor is divided into a plurality of segments at an interval of 30° as described above, the normalized torque patterns 44 and 46 are patterns indicating a relation between the rotation angle and the compensation torque coefficient in respective segments. As described above, after the normalized torque patterns 44 and 46 are decided, compensation torque patterns are generated by multiplying an average torque (for example, values indicated by dotted lines 38 of (B) of FIG. 2 and 39 of (C) of FIG. 2) for rotating the motor by the normalized torque patterns. In this way, under the condition that the compressor load is large, compensation torque patterns are generated by adjusting the normalized torque patterns to a large extent. Furthermore, under the condition that the compressor load is small, compensation torque patterns are generated by adjusting the normalized torque patterns to a small extent.

In the present embodiment in which the motor is driven with the compensation torque patterns generated as described above, an average load torque as indicated by 38 of (B) of FIG. 2 and 39 of (C) of FIG. 2) is firstly calculated from current values detected by the current sensor in the motor being rotated. Furthermore, in the present embodiment, between the normalized torque patterns indicated by 44 of (B) of FIG. 2 and 46 of (C) of FIG. 2), a normalized torque pattern corresponding to a rotation state at that time is selected. Furthermore, in the present embodiment, the compensation torque pattern is generated by multiplying the normalized torque pattern by the average load torque to each other, and a current applied to the motor is controlled using the compensation torque pattern, so that it is possible to perform driving corresponding to the state of the compressor load.

In this way, in the present embodiment, the value of the current supplied to the motor 2 can be easily corrected, so that smooth control is possible. Furthermore, in the present embodiment, the current supplied to the motor is easily calculated from a relational expression between a torque and the current and motor control is performed by a current command, so that a torque pattern can be set as an output torque value. Consequently, in the present embodiment, since it is not necessary to calculate a current value through a simulation and the like, development is easy.

In the following description, although a case where a normalized torque pattern has a coefficient every 30° will be described and a case where the number of normalized torque patterns is 1 will be described, the present invention is not limited thereto. An angle with the coefficient is not limited to 30° and the number of normalized torque patterns may be 1 or 3 or more.

Between the normalized torque patterns indicated by 44 of (B) of FIG. 2 and 46 of (C) of FIG. 2), a normalized torque pattern corresponding to a rotation state at that time is selected in various techniques (for example, see cited reference 1 (Japanese Unexamined Patent Application, First Publication No. 2008-245506)).

<Operation of inductance change unit 13>

Next, an operation of the inductance change unit 13 will be described.

In a normal load, the motor torque does not change suddenly or changes when a speed command changes as with servo control. Furthermore, in speed feedback control in which the speed of the motor is kept constant, the motor torque does not exhibit a change faster than a response of speed control.

However, in an air conditioner, since a load changes during one revolution, a motor torque changes at a frequency identical to the number of rotations in the active control disclosed in the aforementioned cited reference 1.

In order to change the motor torque, it is necessary to change a torque current $i_q$ at the frequency identical to the number of rotations. In such a case, in a magnet motor, a torque axis current $i_q$ and a torque axis magnetic flux $\lambda_q$ are not proportional to each other as illustrated in FIG. 3 when a magnetic flux is saturated in a core of the motor.

FIG. 3 is a diagram illustrating an example of torque axis current with respect to torque axis magnetic flux characteristics. In FIG. 3, a horizontal axis denotes the torque axis current $i_q$ and a vertical axis denotes the torque axis magnetic flux $\lambda_q$.

In FIG. 3, a torque axis inductance $L_q$ is obtained by dividing the torque axis magnetic flux $\lambda_q$ by the torque axis current $i_q$. It should be noted that a torque axis inductance includes $L_q$ ($=\Delta\lambda_q/\Delta i_q$) obtained from a change amount of a current-to-flux characteristic and $L_q'$ ($=d\lambda_q/di_q$) obtained by differentiating the current-to-flux characteristic. Therefore, when the torque currents $i_q$ are different from each other as indicated by a point g1 and a point g2 of FIG. 3, the torque axis inductances $L_q$ and $L_q'$ are also different from each other.

Therefore, in the present embodiment, the inductance change unit 13 changes the torque axis inductance $L_q$ used for speed/position estimation according to the torque axis current $i_q$ with reference to a current-to-inductance ($L_q$ and $L_q$') characteristic stored in the inductance storage section 131. Specifically, the inductance change unit 13 selects the torque axis inductance $L_q$ or $L_q$' corresponding to the torque current $i_q$ output by the 3-phase/2-phase conversion unit 16 with reference to the current-to-inductance ($L_q$) characteristic stored in the inductance storage section 131. The inductance change unit 13 outputs the selected torque axis inductance $L_q$ or $L_q$' to the speed/position estimation unit 14.
It should be noted that for example, when there is little delay in the current detection, the inductance change unit 13 may select at least one of the torque axis inductances $L_q$ and $L_q$' corresponding to the torque current $i_q$.
In such a case, a torque axis inductance to be changed by the inductance change unit 13 in accordance with a current value may be at least one or both of $L_q$ and $L_q$'. It is sufficient if this is a value corresponding to the specifications of the motor controller 1 or the specifications of a device using the motor controller 1.

<Example of current-to-inductance characteristic stored in inductance storage section 131>

Next, an example of the current-to-inductance characteristic stored in the inductance storage section 131 will be described.
FIG. 4 is a diagram illustrating an example of the current-to-inductance characteristic stored in the inductance storage section 131 according to the present embodiment. In FIG. 4, a horizontal axis denotes the q-axis current $i_q$ (also called $I_q$) [A] and a vertical axis denotes the torque axis inductance $L_q$.
The current-to-inductance characteristic illustrated in FIG. 4 is measured in advance and is stored in the inductance storage section 131. The characteristic illustrated in FIG. 4 is an example, and the present invention is not limited thereto.

<Example of procedure of motor controller>

Next, an example of a procedure performed by the motor controller 1 will be described.
FIG. 5 is a flowchart illustrating an example of a procedure performed by the motor controller 1 according to the present embodiment.

(Step S1) The speed control unit 20 generates the d-axis current indication $i_d$* and the q-axis current indication $i_q$* for controlling the motor 2
(Step S2) The inductance change unit 13 calculates at least one of the inductances $L_q$ and $L_q$' corresponding to the q axis current value $i_q$ output by the 3-phase/2-phase conversion unit 16 on the basis of the relation stored in the inductance storage section 131, thereby changes the inductances $L_q$ or $L_q$'.
(Step S3) The speed/position estimation unit 14 changes to at least one of $L_q$ and $L_q$' output by the inductance change unit 13, and estimates the rotational speed (the number of rotations) $\omega_{eS}$ of the rotor of the motor 2 from the input values. The speed/position estimation unit 14 estimates the rotation angle $\theta_{eS}$ (the rotation position of the motor) of the rotor of the motor 2 from the input values.
(Step S4) The speed PI control section 21 calculates the average torque by proportional integral control on the basis of the rotation number command output by the subtraction unit 11.
(Step S5) The load torque compensation unit 12 generates the compensation torque patterns by multiplying the average torque output by the speed PI control section 21 by the normalized torque patterns.
(Step S6) The speed control unit 20 corrects a current value by using the compensation torque patterns generated by the load torque compensation unit 12. Specifically, the addition section 22 of the speed control unit 20 corrects the current value by adding the compensation torque output by the load torque compensation unit 12 to the average torque output by the speed PI control section 21.

It should be noted that the process illustrated in FIG. 5 is an example, and the present invention is not limited thereto.

<Process performed by speed/position estimation unit 14>

Next, an example of a process performed by the speed/position estimation unit 14 will be described.
Firstly, in motor control using an interior permanent magnet (IPM; magnet embedded type) motor, the d-axis voltage $v_d$ and the q-axis voltage $v_q$ output by the current PI control section 25 are expressed by Formula (1) below.
[Math. 1]

$$\begin{bmatrix} v_d \\ v_q \end{bmatrix} = \begin{bmatrix} R + pL_d & -\omega_1 L_q \\ \omega_1 L_d & R + pL_q \end{bmatrix} \begin{bmatrix} i_d \\ i_q \end{bmatrix} + \begin{bmatrix} 0 \\ \Lambda_d n \omega_m \end{bmatrix}, \ \omega_1 = n\omega_m \quad \cdots (1)$$

In Formula (1) above, R denotes wiring resistance [Ω], $L_d$ denotes a d axis inductance [H], $L_q$ denotes a q axis inductance [H], $\Lambda_d$ denotes an induced voltage coefficient [V/(rad/s)], $i_d$ denotes a d axis current [A], and $i_q$ denotes a q axis current [A]. Furthermore, p denotes a differential operator d/dt, $\omega_m$ denotes a rotational speed [rad/s], n denotes a pole pair number of the motor 2, and $\omega_1$ denotes a frequency of the inverter 4 [rad/s].

When Formula (1) above is transformed into a differential equation, Formula (2) below is obtained.

[Math. 2]

$$p\begin{bmatrix} i_d \\ i_q \end{bmatrix} = \begin{bmatrix} \dfrac{R}{L_d} & \omega_1 \dfrac{L_q}{L_d} \\ -\omega_1 \dfrac{L_d}{L_q} & \dfrac{R}{L_q} \end{bmatrix} \begin{bmatrix} i_d \\ i_q \end{bmatrix} + \begin{bmatrix} \dfrac{1}{L_d} & 0 \\ 0 & \dfrac{1}{L_q} \end{bmatrix} \begin{bmatrix} v_d \\ v_q \end{bmatrix} + \begin{bmatrix} 0 \\ -\dfrac{\Lambda_d}{L_q}\omega_1 \end{bmatrix} \quad \cdots (2)$$

The speed/position estimation unit 14 estimates the d-axis current $i_d$ and the q-axis current $i_q$ by using Formula (2) above as expressed by Formula (3) below.

[Math. 3]

$$p\begin{bmatrix} \tilde{i}_d \\ \tilde{i}_q \end{bmatrix} = \begin{bmatrix} -\dfrac{R}{L_d} & \tilde{\omega}_1 \dfrac{L_q}{L_d} \\ -\tilde{\omega}_1 \dfrac{L_d}{L_q} & -\dfrac{R}{L_q} \end{bmatrix} \begin{bmatrix} \tilde{i}_d \\ \tilde{i}_q \end{bmatrix} + \begin{bmatrix} \dfrac{1}{L_d} & 0 \\ 0 & \dfrac{1}{L_q} \end{bmatrix} \begin{bmatrix} v_d \\ v_q \end{bmatrix} + \begin{bmatrix} 0 \\ -\dfrac{\Lambda_d}{L_q}\tilde{\omega}_1 \end{bmatrix} \quad \cdots (3)$$

In Formula (3) above, the superscript ~ denotes an estimated value.

Formula (1) above includes information on a speed. Therefore, when an estimated current value is different from an assumed speed, there is an error between actual current values and actually measured values.

The speed/position estimation unit 14 calculates an error ε of the estimated current by using the estimated value of Formula (3) above and actually measured current values (the i axis current value and the q axis current value).

The speed/position estimation unit 14 converges the error ε of the estimated current to 0 in a PI control manner by using the error ε of the estimated current according to Formula (4) below, thereby estimating the rotational speed (the number of rotations) $\omega_1$.

[Math. 4]

$$\tilde{\omega}_1 = \int_0^t k_1 \varepsilon d\tau + k_2 \varepsilon + \tilde{\omega}_1(0) \quad \cdots (4)$$

In Formula (4) above, $\omega^{\sim}_1$ denotes the estimated value of the rotational speed (the number of rotations) $\omega_1$. Furthermore, $k_1$ and $k_2$ denote I term gain and P term gain of the PI control.

The speed/position estimation unit 14 estimates the rotation angle θ of the rotor, that is, the position of the rotor by using Formula (4) above as expressed by Formula (5) below.

[Math. 5]

$$\tilde{\theta} = \int \tilde{\omega}_1 \, dt \quad \cdots (5)$$

In Formula (5) above, $\theta^{\sim}$ denotes the estimated value of the rotation angle θ (the position of the rotor).

The estimated value of the rotational speed (the number of rotations) $\omega_1$ estimated as above is the rotational speed (the number of rotations) $\omega_{eS}$. Furthermore, the estimated value of the rotation angle $\theta$ (the position of the rotor) is the rotation angle $\theta_{eS}$.

It should be noted that the calculation method of the aforementioned rotational speed (number of rotations) and rotation angle $\theta$ (position of the rotor) is an example, and the present invention is not limited thereto.

As described above, according to the configuration of the present embodiment, it is possible to reduce an error occurring in speed/position estimation, particularly, speed fluctuations. As a result of reducing the speed fluctuations, the load torque compensation unit 12 can select an appropriate torque pattern according to the present embodiment. In this way, according to the present embodiment, it is possible to prevent efficiency reduction due to shaft misalignment, to suppress a vibration occurring due to the motor 2, and to improve efficiency. Furthermore, it is possible to reduce speed fluctuations, so that it is also possible to reduce a control amount of the active torque control according to the present embodiment.

<Second embodiment>

FIG. 6 is a block diagram illustrating an example of a configuration of a motor controller in the present embodiment.

As illustrated in FIG. 6, a motor controller 1A includes a motor 2, an AC power source 3, an inverter 4, a current sensor 10, a subtraction unit 11, a load torque compensation unit 12 (a torque control unit), an inductance change unit 13A, a speed/position estimation unit 14A (a position estimation unit), a 2-phase/3-phase conversion unit 15, a 3-phase/2-phase conversion unit 16A, and a speed control unit 20A.

The speed control unit 20A includes a speed PI control section 21 (an average torque calculation section), an addition section 22, a current conversion section 23A, a subtraction section 24, and a current PI control section 25.

It should be noted that the same reference numerals are used for functional parts having the same functions as those of the motor controller 1 and a description thereof will be omitted.

The speed control unit 20A generates a d-axis voltage value $v_d$ and a q-axis voltage value $v_q$ for controlling the motor 2. The speed control unit 20A outputs the generated d-axis voltage value $v_d$ and q-axis voltage value $v_q$ to the speed/position estimation unit 14A and the 2-phase/3-phase conversion unit 15.

The current conversion section 23A converts added torque output by the addition section 22 into a current, and outputs the converted current command values (a d-axis current command value $i_d$* and a q-axis current command value $i_q$*) to the subtraction section 24. Furthermore, the current conversion section 23A outputs q-axis current command value $i_q$* to the inductance change unit 13A.

The 3-phase/2-phase conversion unit 16A converts a 3-phase current value detected by the current sensor 10 into 2-phase d-axis current value $i_d$ and q-axis current value $i_q$ in accordance with the rotation angle $\theta_{eS}$ of the motor 2 output by the speed/position estimation unit 14A. The 3-phase/2-phase conversion unit 16A outputs the converted d-axis current value $i_d$ and q-axis current value $i_q$ to the speed/position estimation unit 14A and the subtraction section 24 of the speed control unit 20A.

The inductance change unit 13A includes an inductance storage section 131A. The inductance storage section 131A stores a relation between the q-axis current command value $i_q$* and an inductance $L_q$ in the form of a table or a formula for example. Alternatively, the inductance storage section 131A stores a relation between the q-axis current command value $i_q$* and an inductance $L_q$' in the form of a table or a formula for example. Here, the inductance $L_q$' is a differential value $d\lambda_q/di_q$ of a q-axis (a torque axis) current $i_q$ with respect to a torque axis magnetic flux $\lambda_q$.

The inductance change unit 13A calculates at least one of the inductances $L_q$ and $L_q$' corresponding to the q-axis current command value $i_q$* output by the current conversion section 23A on the basis of the relation stored in the inductance storage section 131A. The inductance change unit 13A outputs at least one of the calculated inductances $L_q$ and $L_q$' to the speed/position estimation unit 14A.

The speed/position estimation unit 14A receives the d-axis voltage value $v_d$ and the q-axis voltage value $v_q$ output by the current PI control section 25 and the d-axis current value $i_d$ output by the 3-phase/2-phase conversion unit 16A. Moreover, the speed/position estimation unit 14A receives the q-axis current value $i_q$ and at least one of $L_q$ and $L_q$' output by the inductance change unit 13A. The speed/position estimation unit 14A changes to at least one of $L_q$ and $L_q$' output by the inductance change unit 13A, estimates the rotational speed (the number of rotations of the motor) $\omega_{eS}$ of a rotor of the motor 2 from the input values, and outputs the estimated rotational speed (the number of rotations) $\omega_{eS}$ to the subtraction unit 11. The speed/position estimation unit 14A estimates the rotation angle $\theta_{eS}$ (the rotation position of the motor) of the rotor of the motor 2 from the input values, and outputs the estimated rotation angle $\theta_{eS}$ to the load torque compensation unit 12, the 2-phase/3-phase conversion unit 15, and the 3-phase/2-phase conversion unit 16A.

In the present embodiment, the inductance change unit 13A changes the torque axis inductance $L_q$ used for speed/position estimation according to the torque axis current command value $i_q$* with reference to a current-to-inductance ($L_q$ and $L_q$') characteristic stored in the inductance storage section 131A. Specifically, the inductance change unit 13A selects at least one of the torque axis inductances $L_q$ and $L_q$' corresponding to the torque current command value $i_q$*

output by the current conversion section 23A with reference to the current-to-inductance ($L_q$') characteristic stored in the inductance storage section 131A. The inductance change unit 13A outputs the selected at least one of the torque axis inductances $L_q$ and $L_q$' to the speed/position estimation unit 14A.

It should be noted that for example, when there is delay in the current detection, the inductance change unit 13A selects at least one of the torque axis inductances $L_q$ and $L_q$' corresponding to the torque current command value $i_q$*.

In such a case, a torque axis inductance to be changed by the inductance change unit 13A in accordance with a current value may be at least one or both of $L_q$ and $L_q$'. It is sufficient if this is a value corresponding to the specifications of the motor controller 1A or the specifications of a device using the motor controller 1A.

According to the process of the motor controller 1A, in step S2 of FIG. 5, the inductance change unit 13A calculates at least one of the inductances $L_q$ and $L_q$' corresponding to the q-axis current command value $i_q$* output by the current conversion section 23A on the basis of the relation stored in the inductance storage section 131A, thereby changing at least one of the inductances $L_q$ and $L_q$'.

As described above, according to the configuration of the present embodiment, similarly to the first embodiment, it is possible to reduce an error occurring in speed/position estimation, particularly, speed fluctuations. As a result of reducing the speed fluctuations, the load torque compensation unit 12 can select an appropriate torque pattern according to the present embodiment. In this way, according to the present embodiment, it is possible to prevent efficiency reduction due to shaft misalignment, to suppress a vibration occurring due to the motor 2, and to improve efficiency. Furthermore, it is possible to reduce speed fluctuations, so that it is also possible to reduce a control amount of the active torque control according to the present embodiment.

<Third embodiment>

Although an example in which the inductance change unit 13 selects the inductance $L_q$ or $L_q$' corresponding to the torque current value $i_q$ has been described in the first embodiment and an example in which the inductance change unit 13A selects the inductance $L_q$ or $L_q$' corresponding to the torque current command value $i_q$* has been described in the second embodiment, the present invention is not limited thereto.

The configuration of a motor controller 1A of the third embodiment is similar to that of the second embodiment.

An inductance change unit 13A calculates an average value of the torque current command value $i_q$* in a predetermined period, for example, every sampling timing, and selects at least one of the inductances $L_q$ and $L_q$' corresponding to the calculated average value of the torque current command value $i_q$*. It should be noted that the predetermined period is within one rotation of the motor 2.

According to the process of the motor controller 1A, in step S2 of FIG. 5, the inductance change unit 13A calculates at least one of the inductances $L_q$ and $L_q$' corresponding to the average value of the q-axis current command value $i_q$* output by the current conversion section 23A on the basis of the relation stored in the inductance storage section 131A, thereby changes the inductances $L_q$ or $L_q$'.

For example, when a certain degree of a position error is allowed, provided that it is possible to reduce an error of speed fluctuations, or when it is desired to reduce a calculation amount, the inductance change unit 13A selects at least one of the inductances $L_q$ and $L_q$' corresponding to an average value.

In this way, according to the present embodiment, it is possible to further reduce a calculation amount.

<Fourth embodiment>

In the present embodiment, according to the first embodiment, the speed is actually measured and the inductance storage section 131 stores a value of the inductance $L_q$ or $L_q$' adjusted such that there is no error in speed fluctuations for the d-axis current value $i_d$.

In the present embodiment, according to the the second and third embodiments, the speed is actually measured and the inductance storage section 131A stores a value of the inductance $L_q$ or $L_q$' adjusted such that there is no error in the speed fluctuation for the d-axis current indication $i_d$*.

It should be noted that the inductance $L_q$ adjusted such that there is no error in the speed fluctuation, for example, is a value that takes characteristics (for example, output error and delay) of an actual machine of the inverter 4 into account, and is an inductance corresponding to an actually measured speed.

In the present embodiment, the inductance change unit 13 in the configuration of the first embodiment selects the adjusted inductance $L_q$ or $L_q$' corresponding to the torque current value $i_q$.

In the present embodiment, the inductance change unit 13A in the configuration of the second embodiment selects the adjusted inductance $L_q$ or $L_q$' corresponding to the torque current command value $i_q$*.

In the present embodiment, the inductance change unit 13A in the configuration of the third embodiment calculates an average value of the torque current command value $i_q$* in a predetermined period, for example, every sampling timing, and selects the adjusted inductance $L_q$ or $L_q$' corresponding to the calculated average value of the torque current command value $i_q$*.

In this way, according to the present embodiment, the characteristics (for example, output error and delay) of the actual machine of the inverter 4 are taken into account, so that it is possible to reduce a position estimation error and a speed fluctuation error.

It should be noted that a program for realizing all or some of the functions of the speed control unit 20 (or 20A), the load torque compensation unit 12, the inductance change unit 13 (or 13A), and the speed/position estimation unit 14 (or 14A) in the present invention may be recorded on a computer readable recording medium and a computer system may read and execute the program recorded on the recording medium, so that all or some of the processes performed by the speed control unit 20 (or 20A), the load torque compensation unit 12, the inductance change unit 13 (or 13A), and the speed/position estimation unit 14 (or 14A) may be performed. It should be noted that the "computer system" herein is assumed to include an OS and hardware such as a peripheral device. Furthermore, the "computer system" is assumed to include a WWW system with a homepage providing environment (or a display environment). Furthermore, the "computer readable recording medium" indicates a portable medium such as a flexible disk, a magneto-optical disc, a ROM, and a CD-ROM, and a storage unit such as a hard disk embedded in the computer system. Moreover, the "computer readable recording medium" is assumed to include a medium for holding the program for a constant time period such as a volatile memory (RAM) in the computer system serving as a server or a client in the case in which the program has been transmitted via a network such as the Internet or a communication line such as a telephone line.

Furthermore, the aforementioned program may be transmitted from a computer system having stored the program in a storage device and the like to other computer systems via a transmission medium or a transmission wave of the transmission medium. In this case, the "transmission medium" for transmitting the program indicates a medium having an information transmission function such as a network (a communication network) such as the Internet and a communication line such as a telephone line. Furthermore, the aforementioned program may be a program for realizing some of the aforementioned functions. Moreover, the aforementioned program may also be a program capable of realizing the aforementioned functions by a combination with a program previously recorded in the computer system, a so-called difference file (a difference program).

While preferred embodiments of the invention have been described and illustrated above, it should be understood that these are exemplary of the invention and are not to be considered as limiting. Additions, omissions, substitutions, and other modifications can be made without departing from the spirit or scope of the present invention.

[Industrial Applicability]

According to the present invention, it is possible to reduce an error of a speed estimation value and to perform vibration suppression.

[Reference Signs List]

1, 1A Motor controller
2 Motor
3 AC power source
4 Inverter
10 Current sensor
11 Subtraction unit
12 Load torque compensation unit
13, 13A Inductance change unit
14, 14A Speed/position estimation unit
15 2-phase/3-phase conversion unit
16, 16A 3-phase/2-phase conversion unit
20, 20A Speed control unit
21 Speed PI control section
22 Addition section
23, 23A Current conversion section
24 Subtraction section
25 Current PI control section
121 Torque pattern storage section
131, 131A Inductance storage section

## Claims

1. A motor controller comprising:

   a speed control unit configured to command values for currents supplied to a motor in order to rotate the motor at a target speed;
   an inductance change unit configured to change an inductance of the motor on the basis of information on a torque axis current among the values of the currents supplied to the motor;
   a position estimation unit configured to estimate a rotation position of the motor from the values of the currents by using the inductance changed by the inductance change unit;
   an average torque calculation section configured to calculate an average load torque of the motor;
   a torque pattern storage section configured to store a normalized torque pattern serving as a reference for changing an output torque of the motor in accordance with the rotation position of the motor; and
   a torque control unit configured to generate a compensation torque pattern for changing the output torque of the motor in accordance with the rotation position of the motor by a product of the average load torque and the normalized torque pattern, and to correct the values of the currents supplied to the motor.

2. The motor controller according to claim 1, wherein the information on the torque axis current among the values of the currents is a torque axis current value, and the motor controller comprises:

   an inductance storage section configured to store a correspondence relation between the torque axis current value and the inductance,
   wherein the inductance change unit is configured to change the inductance of the motor to an inductance corresponding to the torque axis current value and stored in the inductance storage section.

3. The motor controller according to claim 1, wherein the information on the torque axis current among the values of the currents is a torque axis current indication, and the motor controller comprises:

   an inductance storage section configured to store a correspondence relation between the torque axis current indication and the inductance,
   wherein the inductance change unit is configured to change the inductance of the motor to an inductance corresponding to the torque axis current indication and stored in the inductance storage section.

4. The motor controller according to claim 1, wherein the information on the torque axis current among the values of the currents is a torque axis current indication, and the motor controller comprises:

   an inductance storage section configured to store a correspondence relation between the torque axis current indication and the inductance,
   wherein the inductance change unit is configured to calculate an average value of the torque axis current indication in a predetermined period, and change the inductance of the motor to an inductance corresponding to the average value of the torque axis current indication in the predetermined period and stored in the inductance storage section.

5. A motor control method of a motor controller, comprising:

   a step in which a speed control unit commands values for currents supplied to a motor in order to rotate the motor at a target speed;
   a step in which an inductance change unit changes an inductance of the motor on the basis of information on a torque axis current among the values of the currents supplied to the motor;
   a step in which a position estimation unit estimates a rotation position of the motor from the values of the currents by using the inductance changed by the inductance change unit;
   a step in which an average torque calculation section calculates an average load torque of the motor; and
   a step in which a torque control unit generates a compensation torque pattern for changing an output torque of the motor in accordance with a rotation position of the motor by a product of a normalized torque pattern, which serves as a reference for changing the output torque of the motor in accordance with the rotation position of the motor, and the average load torque, and corrects the values of the currents supplied to the motor.

FIG. 1

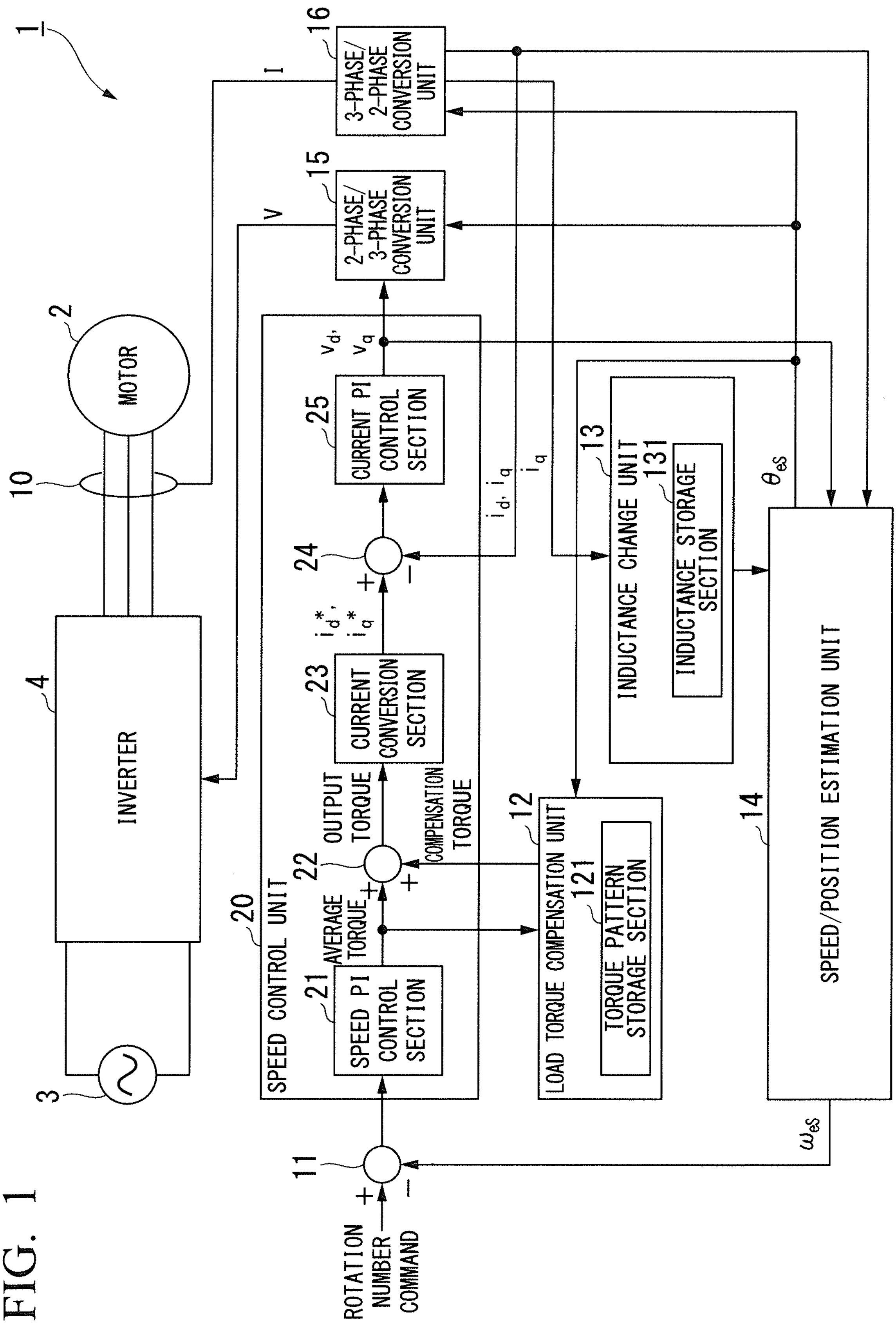
1
MOTOR
2
3
INVERTER
4
10
I
V
16
3-PHASE/2-PHASE CONVERSION UNIT
15
2-PHASE/3-PHASE CONVERSION UNIT
20
SPEED CONTROL UNIT
21
SPEED PI CONTROL SECTION
AVERAGE TORQUE
22
OUTPUT TORQUE
COMPENSATION TORQUE
23
CURRENT CONVERSION SECTION
$i_d^*$, $i_q^*$
24
$i_d$, $i_q$
25
CURRENT PI CONTROL SECTION
$v_d$, $v_q$
$i_q$
12
LOAD TORQUE COMPENSATION UNIT
121
TORQUE PATTERN STORAGE SECTION
13
INDUCTANCE CHANGE UNIT
131
INDUCTANCE STORAGE SECTION
$\theta_{eS}$
14
SPEED/POSITION ESTIMATION UNIT
$\omega_{eS}$
11
ROTATION NUMBER COMMAND

FIG. 2

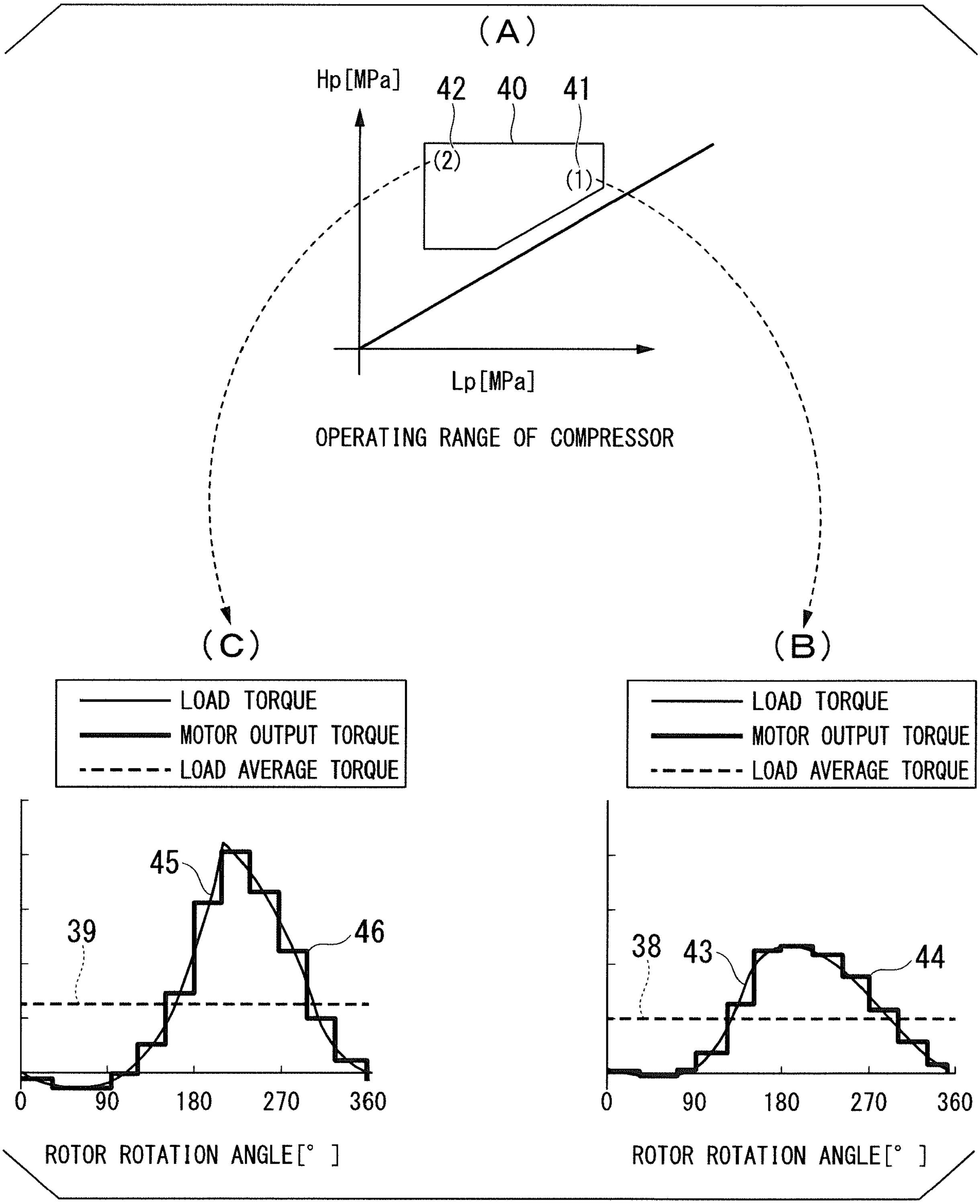
(A)
Hp[MPa]
42
40
41
(2)
(1)
Lp[MPa]
OPERATING RANGE OF COMPRESSOR
(C)
LOAD TORQUE
MOTOR OUTPUT TORQUE
LOAD AVERAGE TORQUE
45
39
46
0
90
180
270
360
ROTOR ROTATION ANGLE[° ]
(B)
LOAD TORQUE
MOTOR OUTPUT TORQUE
LOAD AVERAGE TORQUE
38
43
44
0
90
180
270
360
ROTOR ROTATION ANGLE[° ]

FIG. 3

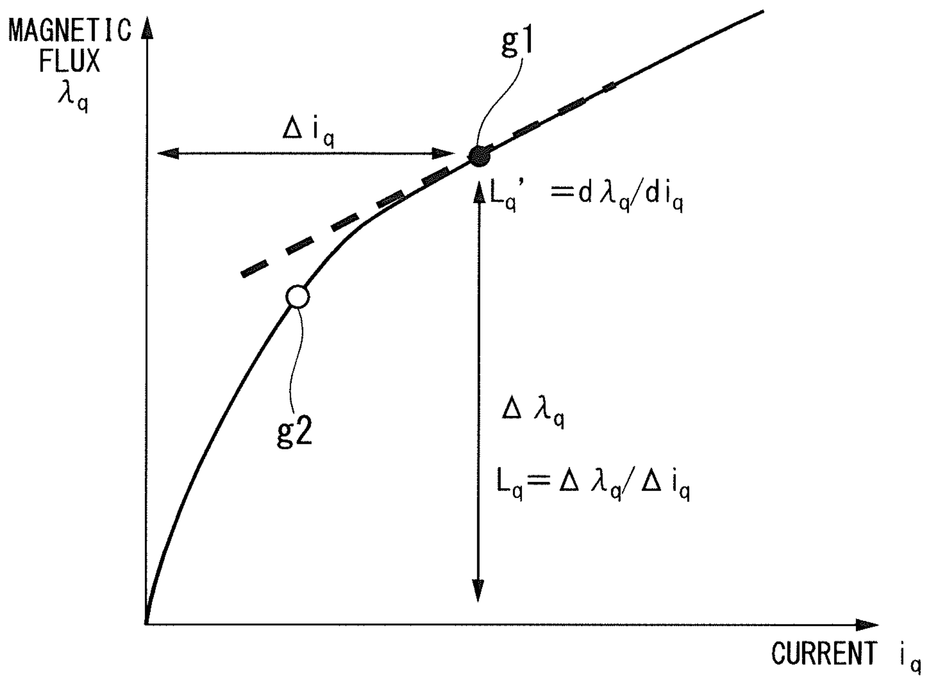
MAGNETIC
FLUX
λq
Δ iq
g1
Lq' =dλq/diq
g2
Δ λq
Lq=Δ λq/Δ iq
CURRENT iq

FIG. 4

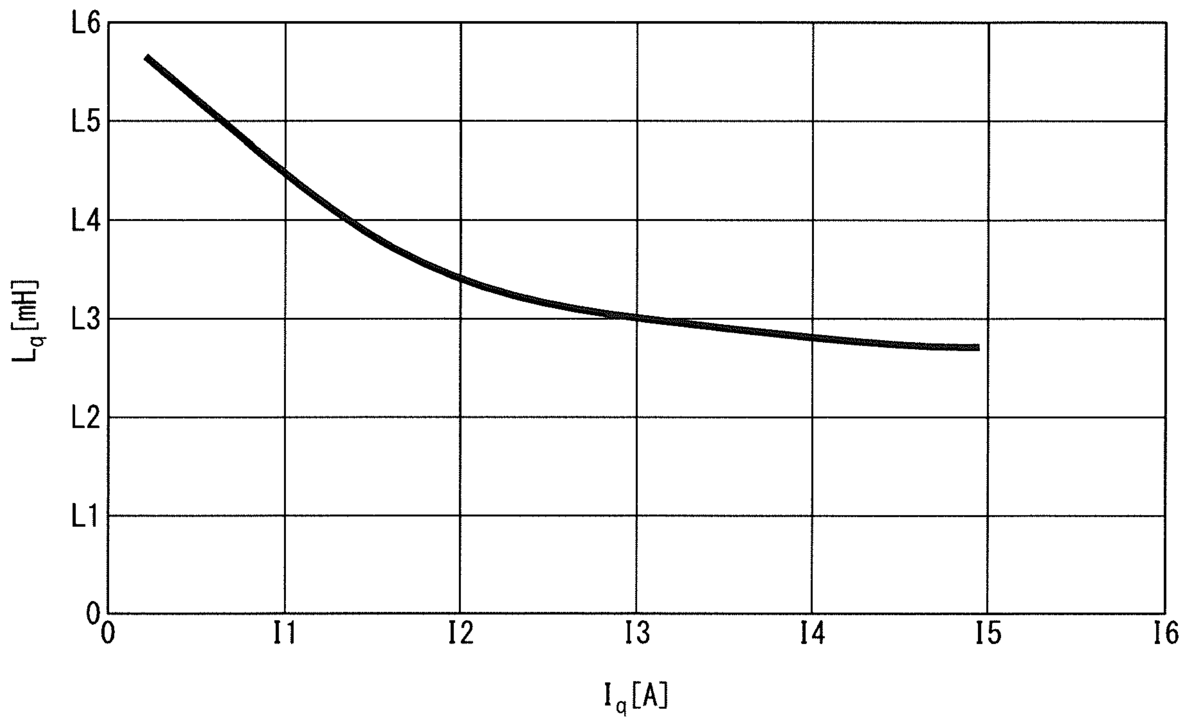
L6
L5
L4
L3
L2
L1
0
Lq[mH]
0
I1
I2
I3
I4
I5
I6
Iq[A]

FIG. 5

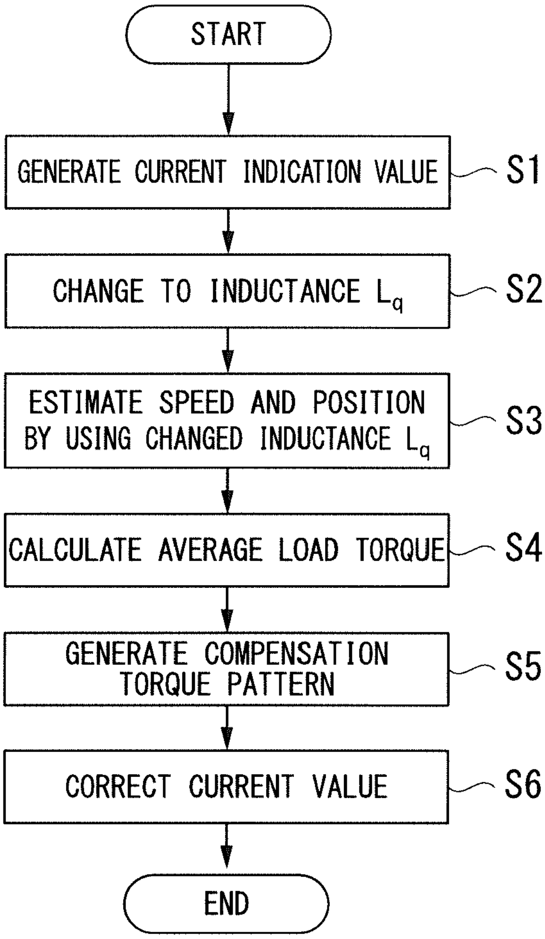
START
GENERATE CURRENT INDICATION VALUE
S1
CHANGE TO INDUCTANCE $L_q$
S2
ESTIMATE SPEED AND POSITION BY USING CHANGED INDUCTANCE $L_q$
S3
CALCULATE AVERAGE LOAD TORQUE
S4
GENERATE COMPENSATION TORQUE PATTERN
S5
CORRECT CURRENT VALUE
S6
END

FIG. 6

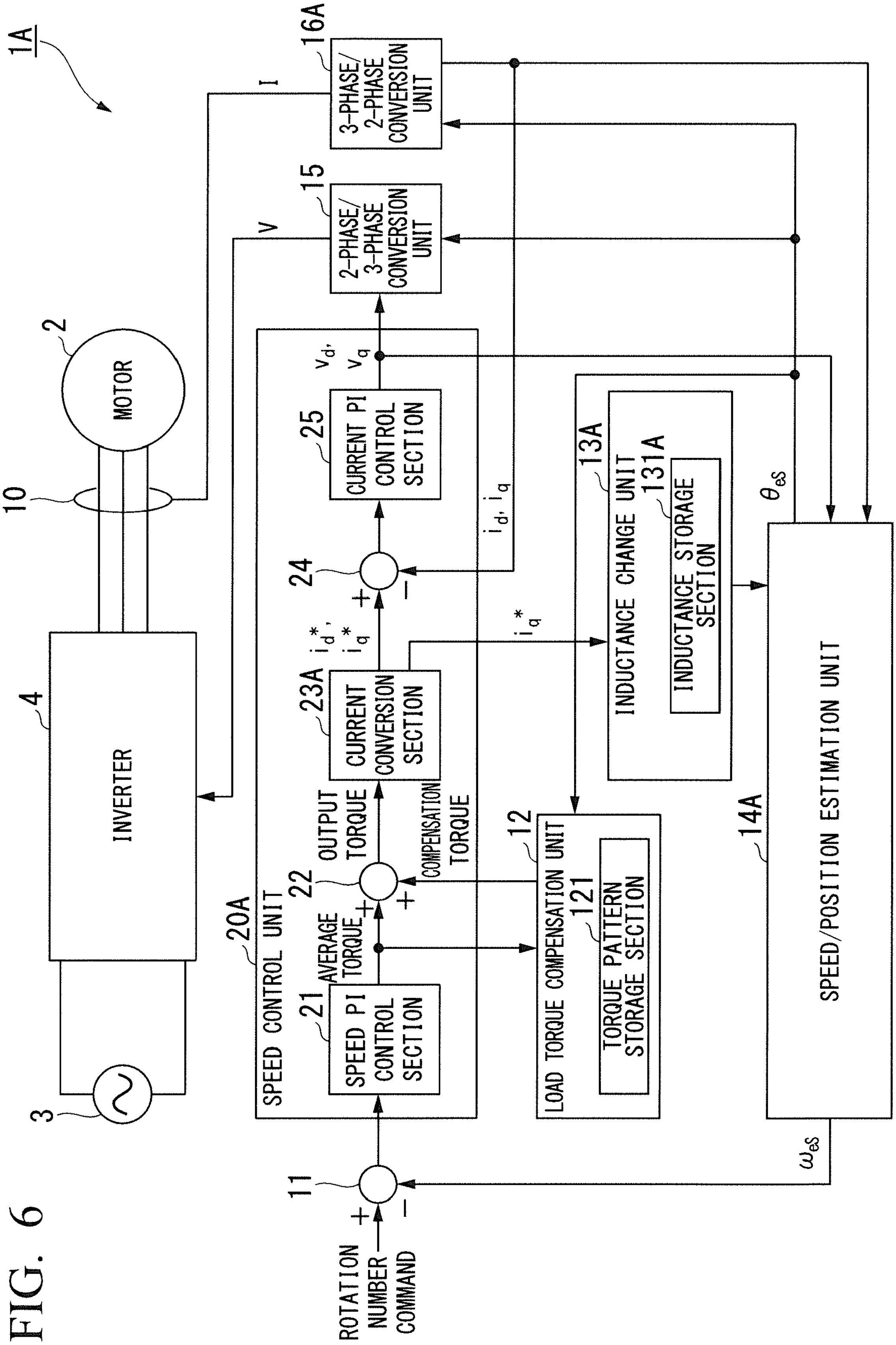
1A
MOTOR
2
10
INVERTER
4
3
16A
3-PHASE/ 2-PHASE CONVERSION UNIT
15
2-PHASE/ 3-PHASE CONVERSION UNIT
I
V
SPEED CONTROL UNIT
20A
21
SPEED PI CONTROL SECTION
AVERAGE TORQUE
22
OUTPUT TORQUE
COMPENSATION TORQUE
23A
CURRENT CONVERSION SECTION
$i_d^*$, $i_q^*$
24
25
CURRENT PI CONTROL SECTION
$v_d$, $v_q$
$i_d$, $i_q$
$i_q^*$
12
LOAD TORQUE COMPENSATION UNIT
121
TORQUE PATTERN STORAGE SECTION
13A
INDUCTANCE CHANGE UNIT
131A
INDUCTANCE STORAGE SECTION
14A
SPEED/POSITION ESTIMATION UNIT
$\theta_{eS}$
$\omega_{eS}$
11
ROTATION NUMBER COMMAND

Europäisches Patentamt
European Patent Office
Office européen des brevets

# EUROPEAN SEARCH REPORT

Application Number
EP 19 15 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2008 245506 A (MITSUBISHI HEAVY IND LTD) 9 October 2008 (2008-10-09)<br>* abstract *<br>* paragraph [0055] - paragraph [0061]; figure 1 *<br>----- | 1-5 | INV.<br>H02P6/10<br>H02P6/185 |
| A | US 2015/280626 A1 (YE JIN [CA] ET AL) 1 October 2015 (2015-10-01)<br>* paragraph [0132]; figures 1A,1B *<br>* paragraph [0189] - paragraph [0193]; figure 11A *<br>----- | 1-5 | |

TECHNICAL FIELDS SEARCHED (IPC)

H02P

The present search report has been drawn up for all claims

1

| Place of search | Date of completion of the search | Examiner |
|---|---|---|
| Munich | 6 June 2019 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 15 5175

This annex lists the patent family members relating to the patent documents cited in the above-mentioned European search report. The members are as contained in the European Patent Office EDP file on The European Patent Office is in no way liable for these particulars which are merely given for the purpose of information.

06-06-2019

| Patent document cited in search report | Publication date | Patent family member(s) | Publication date |
|---|---|---|---|
| JP 2008245506 A | 09-10-2008 | JP 5291325 B2 | 18-09-2013 |
| | | JP 2008245506 A | 09-10-2008 |
| US 2015280626 A1 | 01-10-2015 | CA 2887080 A1 | 01-10-2015 |
| | | US 2015280626 A1 | 01-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016082636 A
- JP 2008245506 A